# EUROPEAN PATENT SPECIFICATION

(11) **EP 2 930 190 B1**
(45) Date of publication and mention of the grant of the patent: **17.07.2019**
(21) Application number: 13859988.1
(22) Date of filing: 18.02.2013
(51) Int. Cl.: C08B 11/08, C08B 15/10

(54) **METHOD FOR PREPARING ACETYLATED CELLULOSE ETHERS HAVING IMPROVED ANTI-FOULING PROPERTIES, AND ACETYLATED CELLULOSE ETHERS PREPARED BY SAME**
VERFAHREN ZUR HERSTELLUNG ACETYLIERTER CELLULOSEETHER MIT VERBESSERTEN FÄULNISVERHINDERNDEN EIGENSCHAFTEN UND IN DIESEM VERFAHREN HERGESTELLTE ACETYLIERTE CELLULOSEETHER
PROCÉDÉ DE PRÉPARATION D'ÉTHERS DE CELLULOSE ACÉTYLÉS À PROPRIÉTÉS ANTI-COLMATAGE AMÉLIORÉES ET ÉTHERS DE CELLULOSE ACÉTYLÉS AINSI PRÉPARÉS

(30) Priority: 07.12.2012 KR 20120142218
(43) Date of publication of application: 14.10.2015
(73) Proprietor: LOTTE Fine Chemical Co., Ltd., Ulsan, 44714 (KR)
(72) Inventor: KIM, Tae Hong, Ulsan 681-430 (KR); SON, Byoung Hee, Ulsan 681-765 (KR)
(74) Representative: Kador & Partner PartG mbB
(86) International application number: PCT/KR2013/001251
(87) International publication number: WO 2014/088154

(56) References cited:
- EP-A1- 1 452 544
- EP-A1- 2 888 289
- JP-A- 2005 283 997
- KR-A- 20110 074 201
- KR-A- 20110 089 662
- KR-A- 20120 062 285
- US-A- 3 592 672
- US-A1- 2013 245 248

## Description

### [Technical Field]

The present invention relates to a method for preparing an acetylated cellulose ether having improved anti-fouling properties, and an acetylated cellulose ether prepared by the same. More particularly, the present invention relates to a method for preparing an acetylated cellulose ether having improved anti-fouling properties where the acetylated cellulose ether is obtained by acetylating a cross-linked cellulose ether to introduce additional hydrophilic groups, and an acetylated cellulose ether prepared by the same.

### [Background Art]

Materials for water-treatment membranes should have anti-fouling properties, chlorine resistance and tensile strength while exhibiting high hydrophilic properties. Specifically, the risk of contamination may be lowered as the hydrophilic properties increases, the membranes may be washed without any damage as the chlorine resistance increases, and the membranes may cope with a certain pressure even when used for a long period of time as the tensile strength increases.

In the prior art, cellulose acetate capable of lowing contamination of membranes due to low tensile strength and chlorine resistance but high hydrophilic properties to extend washing cycles, and polyvinylidene fluoride favorable for washing due to low hydrophilic properties but high chlorine resistance have been widely used as the materials for water-treatment membranes.

However, the cellulose acetate has an advantage in that it is possible to minimize the contamination of the membranes due to excellent hydrophilic properties, but has a problem in that it has low mechanical strength. That is, since cellulose that is a source material should be acetylated while destroying a crystal structure of the cellulose upon preparation of the cellulose acetate, a polar catalyst such as an inorganic acid is used for acetylation. Therefore, the cellulose acetate finally prepared by cleaving the main chain of cellulose has a problem in that it has a small molecular weight and a remarkably low mechanical strength.

Also, since the polyvinylidene fluoride has excellent mechanical strength and chlorine resistance but low hydrophilic properties, and thus membranes including the polyvinylidene fluoride have a problem in that they may be easily contaminated, and thus should be often washed.

As a result, it is currently proposed that an acetylated cellulose ether synthesized by acetylating a cellulose ether is used for water-treatment membranes. However, the water-treatment membranes may be contaminated due to a fouling phenomenon caused by organic matters when the acetylated cellulose ether is actually used for the water-treatment membranes, resulting in degraded durability of the membranes and frequent breakdowns. Further, EP 2 888 289 A0 refers to a partially cross-linked esterified cellulose ether having A) groups of the formula -C(O)-R-COOA or a combination of aliphatic monovalent acyl groups and groups of the formula -C(O)-R-COOA, wherein R is a divalent aliphatic or aromatic hydrocarbon group and A is hydrogen or a cation, and B) having a molecular weight distribution such that [Wf(>100k) - Wf(>100k)XL] / Wf(>100k)XL is at least 0.20, wherein Wf(>100k) is the total weight fraction of the esterified cellulose ether that exceeds 100,000 g/mol, and Wf(>100k)XL is the weight fraction that exceeds 100,000 g/mol of the methylated esterified cellulose ether. Therefore, development of materials capable of improving the fouling of membranes by organic matters is demanded.

Accordingly, the present inventors have found that, when a cellulose ether that is a source material for preparing an acetylated cellulose ether to enhance hydrophilic properties is cross-linked, and acetylated to improve anti-fouling properties of a membrane material, it is possible to prepare an acetylated cellulose ether whose hydrophilic properties are enhanced by hydroxyl groups present in the cross-linked material, and that the anti-fouling properties of the water-treatment membranes can be remarkably improved due to presence of the acetylated cellulose ether having such additional hydrophilic groups introduced thereto. Therefore, the present invention has been completed based on these facts.

### [Disclosure]

### [Technical Problem]

Therefore, the present invention is designed to solve the problems of the prior art, and therefore it is an object of the present invention to provide a method for preparing an acetylated cellulose ether having improved anti-fouling properties.

It is another object of the present invention to provide an acetylated cellulose ether having improved anti-fouling properties.

### [Technical Solution]

According to an aspect of the present invention, there is provided a method for preparing an acetylated cellulose ether having improved anti-fouling properties, which includes the steps of cross-linking a cellulose ether, and acetylating the cross-linked cellulose ether.

The cellulose ether may preferably have at least one substituent selected from the group consisting of methyl, ethyl, propyl, hydroxymethyl, hydroxyethyl, and hydroxypropyl groups. Particularly preferably, the cellulose ether may be at least one selected from the group consisting of methylcellulose, hydroxypropyl methylcellulose, and hydroxyethyl methylcellulose.

A material for cross-linking the cellulose ether may be preferably at least one selected from the group consisting of glyoxal and glutaraldehyde. Preferably, the glyoxal, and glutaraldehyde may be cross-linked with the cellulose ether at a content of 0.5 to 2.5% by weight, based on the total weight of the cellulose ether.

The acetylated cellulose ether may preferably have a degree of substitution with alkyl groups (DS) of 1 to 2, a degree of substitution with hydroxyalkyl groups (MS) of 0 to 1, and a degree of substitution with acetyl groups (DS) of 1 to 2.

According to another aspect of the present invention, there is provided an acetylated cellulose ether which is cross-linked with a material for cross-linking the cellulose ether selected from the group consisting of glyoxal and glutaraldehyde, and in which hydrogen atoms in hydroxyl groups included in a monomer of the cross-linked celluloseether are substituted with acetyl groups.

### [Advantageous Effects]

The acetylated cellulose ether obtained by acetylating a cross-linked cellulose ether to introduce additional hydrophilic groups thereto can be useful in activating hydroxyl groups which are blocked by agglomeration between polymers by cross-linking, and introducing additional hydrophilic groups thereto so as to causing an increase in hydrophilic properties, thereby improving anti-fouling properties.

### [Description of Drawing]

These and other features, aspects, and advantages of preferred embodiments of the present invention will be more fully described in the following detailed description, taken accompanying drawing. In the drawing:

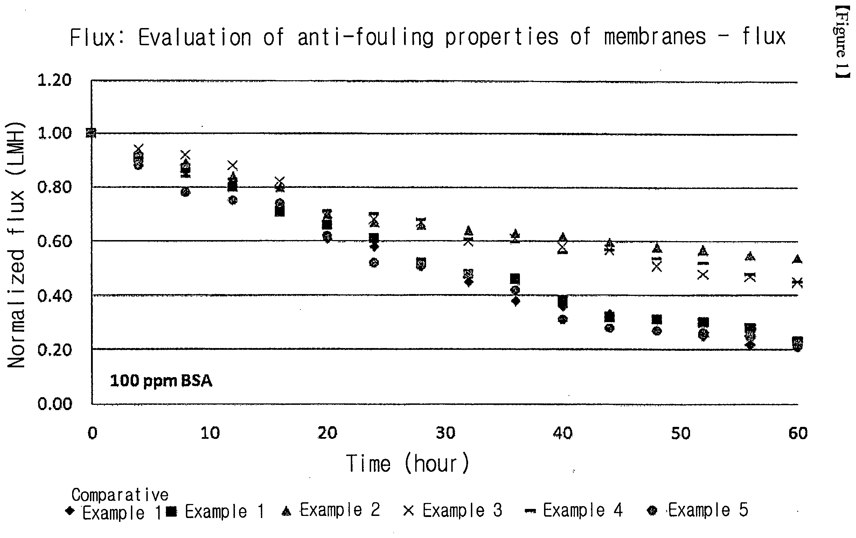

FIG. 1 is a graph illustrating the results obtained by measuring anti-fouling properties of acetylated cellulose ethers prepared according to one exemplary embodiment of the present invention.

### [Best Mode]

Hereinafter, the method for preparing an acetylated cellulose ether according to one exemplary embodiment of the present invention, and the acetylated cellulose ether prepared by the same will be described in further detail.

The method for preparing an acetylated cellulose ether having improved anti-fouling properties according to one exemplary embodiment of the present invention includes the steps of cross-linking a cellulose ether, and acetylating the cross-linked cellulose ether.

In the step of cross-linking the cellulose ether, a material for cross-linking the cellulose ether is mixed, and stirred at 60 to 100 °C, preferably 80 °C, for 0.5 hours to 2 hours, preferably for an hour, to cross-link the cellulose ether.

The material for cross-linking a cellulose ether is preferably selected from the group consisting of glyoxal and glutaraldehyde, and more preferably glyoxal.

As the cellulose ether is cross-linked, especially cross-linked with glyoxal, hydroxyl groups blocked by agglomeration between cellulose ether polymers may be activated. Also, the hydrophilic properties may be enhanced as the hydrophilic groups are further introduced to the acetylated cellulose ether, thereby improving anti-fouling properties.

The material for cross-linking a cellulose ether is preferably cross-linked with the cellulose ether at a content of 0.5 to 2.5% by weight, based on the total weight of the cellulose ether. When the material is present at a content of less than 0.5% by weight and greater than 2.5% by weight to cross-link the cellulose ether, this content range is undesirable since it is impossible to obtain the above-described anti-fouling properties.

The cross-linked cellulose ether is prepared by etherifying hydroxyl groups of cellulose. That is, a cellulose ether is formed by blocking some of the hydroxyl groups in the structure of cellulose by etherification of cellulose, or by substituting hydrogen atoms in the hydroxyl groups with another substituent. In this case, the main chain of cellulose is not cleaved, but maintained intact. However, the cellulose is converted into an amorphous structure due to destruction of hydrogen bonds in cellulose, thereby resulting in water-soluble cellulose ether having a high molecular weight.

In the case of the cross-linked cellulose ether, the hydroxyl groups are present in the material for cross-linking a cellulose ether in addition to the three hydroxyl groups present in the monomer. In this case, the acetylation reaction occurs only in the hydroxyl groups present in the cellulose ether monomer.

The cross-linked hydroxyl groups are cleaved under neutral pH conditions with time. To verify this result, a degree of acetylation of the acetylated cellulose ethersynthesized using the cross-linked cellulose ether with time is measured. When the cross-linked hydroxyl groups are acetylated, the degree of acetylation value decreases with time. However, the measurement results show that a change in the degree of acetylation with time is not observed.

The cellulose ether has at least one substituent selected from the group consisting of methyl, ethyl, propyl, hydroxymethyl, hydroxyethyl, and hydroxypropyl groups. For example, the cellulose ether may include hydroxyethyl methylcellulose, hydroxypropyl methylcellulose, or methyl cellulose.

Also, the degree of substitution with alkyl groups (such as a methyl group, an ethyl group, or a propyl group) (DS) and the degree of substitution with hydroxyalkyl groups (such as a hydroxymethyl group, a hydroxyethyl group, or a hydroxypropyl group) (MS) are basic degrees of substitution of cellulose ethers generally used in the related art. Specifically, the degree of substitution with alkyl groups (DS) is in a range of 1 to 2, the degree of substitution with hydroxyalkyl groups (MS) is in a range of 0 to 1.

The term "degree of substitution (DS)" refers to an average number of hydroxyl groups substituted with alkyl groups per anhydroglucose unit. When three hydroxyl groups are present per anhydroglucose unit, a theoretical degree of substitution (DS) is 3. However, since multifunctional or polymerizable substituents react with hydrogen atoms in the hydroxyl groups included in the anhydroglucose unit and also react with themselves, the degree of substitution (DS) is not limited to 3.

The following Formulas 1 and 2 show a process of etherifying an anhydroglucose that is a base repeating unit of cellulose. In particular, Formula 1 shows that cellulose is etherified to be converted into a hydroxyalkyl alkylcellulose, Formula 2 shows that cellulose is etherified to be converted into an alkylcellulose.

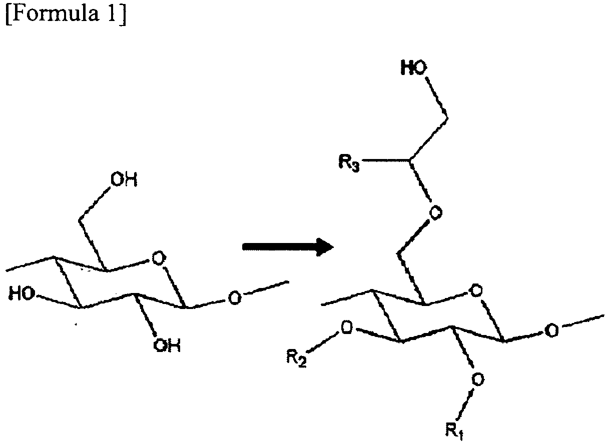

In Formula 1, R₁ and R₂ are each independently a hydrogen, methyl, ethyl, propyl, hydroxymethyl, hydroxyethyl, or hydroxypropyl group, and R₃ is hydrogen, or a methyl group.

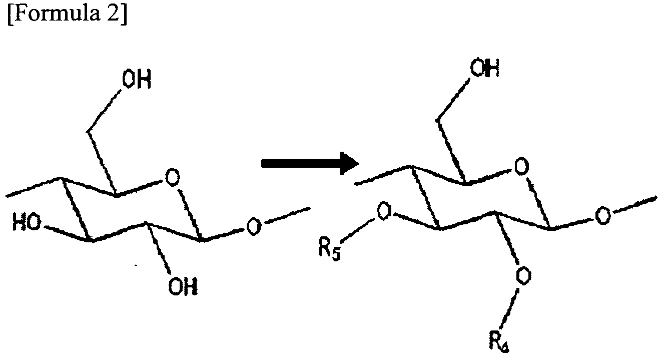

In Formula 2, R₄ and R₅ are each independently hydrogen, or a methyl, ethyl or propyl group.

The basic repeating units of the cellulose ether represented by Formulas 1 and 2 thus prepared are cross-linked with the material for cross-linking the cellulose ether to introduce additional hydrophilic groups to the acetylated cellulose ether.

In the step of acetylating the cross-linked cellulose ether, hydrogen atoms in the hydroxyl groups included in the cellulose ether are substituted with acetyl groups (CH₃CO⁻). For this purpose, the cross-linked cellulose ether may be acetylated by mixing acetic acid, anhydrous acetic acid, sodium acetate or a combination thereof with the cross-linked cellulose ether, and stirring the resulting mixture at a temperature of 60 to 80 °C for 6 to 8 hours. Here, acetic acid, pyridine, isopropyl alcohol (IPA) or the like may be used as a reaction solvent, and sodium acetate or phosphoric acid may also be used as a catalyst.

In addition, the acetylated cellulose ether obtained by the method as described above has a degree of substitution with acetyl groups of 1 to 2.

The acetylated cellulose ether obtained by the preparation method as described above has a number average molecular weight of 300,000 to 1,000,000, a contact angle of 25 to 45°, and a tensile strength of 45 to 75 MPa. Here, the term "contact angle" refers to an angle formed between a free surface of water and a flat surface of a film when the film prepared from the acetylated cellulose ether comes in contact with water. Also, the term "tensile strength" refers to a tensile strength of the film prepared from the acetylated cellulose ether.

The acetylated cellulose ether has a degree of substitution with alkyl groups (DS) of 1 to 2, a degree of substitution with hydroxyalkyl groups (MS) of 0 to 1 and a degree of substitution with acetyl groups (DS) of 1 to 2.

Since the above-described acetylated cellulose ether is not dissolved in water but is readily dissolved in an organic solvent such as acetone, and has a high molecular weight to exhibit excellent mechanical strength, the acetylated cellulose ether may be used for water-treatment membranes, and the like.

### [Mode for Invention]

Hereinafter, the present invention will be described in detail with reference to the following Examples. However, it should be understood that the following Examples are not intended to limit the scope of the present invention.

### Examples 1 to 5: Preparation of acetylated cellulose ethers

150 g of a cellulose ether was added to a 3 L reactor equipped with a condenser, a thermometer and a stirrer, and glyoxal was added to the reactor at contents as listed in the following Table 1. Thereafter, the resulting mixture was reacted at 80 °C for an hour while stirring at 150 rpm to cross-link glyoxal with the cellulose ether. 1,050 g of acetic acid, 300 g of sodium acetate, and 750 g of an acetic anhydride were added to the glyoxal cross-linked cellulose ether, and then reacted at 70 °C for 7 hours while stirring at 650 rpm to prepare an acetylated cellulose ether. In this case, the acetic acid was used as a solvent, and the sodium acetate was used as a catalyst. Subsequently, the contents in the reactor were sprayed, coagulated in a 10L coagulating bath, washed five times with clean water, and then dried. The degree of substitution with methyl groups (DS) and the degree of substitution with hydroxypropyl groups (MS) of the cellulose ether used in each of Examples, the quantity of glyoxal used, and the molar ratio of the acetic anhydride used per anhydroglucose unit included in each cellulose ether are listed in the following Table 1.

### Comparative Example 1

An acetylated cellulose ether was prepared in the same manner as in Examples 1 to 5, except that the cellulose ether was not cross-linked with glyoxal.

**[Table 1]**

| | Cellulose ether cross-linked with glyoxal | | | | anhydrous acetic acid/anhydroglucose unit ratio (molar ratio) |
|---|---|---|---|---|---|
| | Type of cellulose ether | Degree of substitution with methyl groups | Degree of substitution with hydroxypropyl groups | Glyoxal (% by weight) | |
| Example 1 | HPMC | 1.84 | 0.25 | 0.5 | 5.95 |
| Example 2 | HPMC | 1.84 | 0.25 | 1.0 | 5.95 |
| Example 3 | HPMC | 1.84 | 0.25 | 1.5 | 5.95 |
| Example 4 | HPMC | 1.84 | 0.25 | 2.0 | 5.95 |
| Example 5 | HPMC | 1.84 | 0.25 | 2.5 | 5.95 |
| Comparative Example 1 | HPMC | 1.84 | 0.25 | - | 5.95 |

As listed in Table 1, hydroxypropyl methylcellulose (HPMC) used herein as the cellulose ether is a commercialized standard produced by Samsung Fine Chemicals Co., Ltd.

### Experimental Example

The degree of substitution with acetyl groups, the contact angle with water, the tensile strength, the molecular weight and the anti-fouling properties of each of the acetylated cellulose ethers prepared in Examples 1 to 5 and Comparative Example 1 were measured as follows. The measurement results are listed in the following Table 2.

### Measurement of degree of substitution with acetyl groups

Free acetic acid formed by saponification of a sample of each of the acetylated cellulose ethers prepared in Examples 1 to 5 and Comparative Example 1 was titrated with an alkali, and the degree of substitution with acetyl groups of each of the samples was measured according to ASTM D871-96.

### Measurement of contact angle and tensile strength

10 g of each of the samples prepared in Examples 1 to 5 and Comparative Example 1 was dissolved in 90 g of dimethylformamide (DMF), and 10 g of the resulting solution was drawn, casted on a glass plate to a thickness of 2 mm, and then dried in a vacuum oven. In this case, the vacuum oven was maintained at a temperature of 60 °C, and the thickness of the final film was 0.2±0.02 mm.

### (1) Measurement of contact angle

The contact angle between water and each of the prepared films was measured using a contact angle measuring machine (KSV, Theta optical tensimeter) in a state in which each film came in contact with water. Here, a lower contact angle means higher hydrophilic properties.

### (2) Measurement of tensile strength

The tensile strength of each of the films was measured using a strength measuring machine (Instron, No. 5569).

### Measurement of molecular weight

Each of the samples was measured for weight average molecular weight (Mw) using size exclusion chromatography (Agilent, HP 1100). Specifically, 0.1 g of each sample was dissolved in 100 g of dimethylformamide (HPLC-grade), and the resulting solution was measured under conditions of a temperature of 25 °C and a flow rate of 10 ml/min using dimethylformamide as a mobile phase.

**[Table 2]**

| Items | Degree of substitution with acetyl groups | Contact angle (°) | Tensile strength (MPa) | Molecular weight (Dalton) |
|---|---|---|---|---|
| Example 1 | 1.16 | 43 | 50 | 425,000 |
| Example 2 | 1.15 | 40 | 48 | 482,000 |
| Example 3 | 1.14 | 36 | 68 | 420,000 |
| Example 4 | 1.19 | 39 | 75 | 415,000 |
| Example 5 | 1.10 | 37 | 51 | 455,000 |
| Comparative Example 1 | 1.15 | 49 | 66 | 472,000 |

As listed in Table 2, it could be seen that the respective acetylated cellulose ethers prepared from the glyoxal cross-linked cellulose ether in Examples 1 to 5 had similar tensile strength and molecular weight to the acetylated cellulose ether prepared from the non-cross-linked cellulose ether in Comparative Example 1, but the acetylated cellulose ethers of Examples 1 to 5 had a lower contact angle than that of Comparative Example 1, indicating that the acetylated cellulose ethers of Examples 1 to 5 had improved hydrophilic properties.

### Evaluation of anti-fouling properties - flux

Each of the acetylated cellulose ethers obtained in Examples 1 to 5 and Comparative Example 1 was mounted as a membrane in a cross-flow membrane cell made from a stainless material, and compressed with 10 L of ultra-pure water at a pressure of 2 kgf/cm². Thereafter, 100 ppm BSA was added to the ultra-pure water, and a change in water permeability at a pressure of 1 kgf/cm² was measured. The results are shown in FIG. 1. The normalized flux in a longitudinal direction of the graph shown in FIG. 1 represents LMH (volume, area and time), that is, the quantity of water permeated per unit area with time (ΔV/A^{∗}Δt).

As shown in FIG. 1, it was revealed that a decrease in flux with time was remarkably low in the case of Examples 2 to 4, compared to that of Comparative Examples, and that a decrease in flux in Examples 1 and 5 in which the content of the cross-linked glyoxal was a critical value was similar to that of Comparative Examples, indicating that the acetylated cellulose ethers prepared from the cross-linked cellulose ether in which glyoxal was present at a predetermined content had remarkably improved anti-fouling properties.

## Claims

1. A method for preparing an acetylated cellulose ether having improved anti-fouling properties, comprising the steps of:
cross-linking a cellulose ether; and
acetylating the cross-linked cellulose ether.

2. The method of claim 1, wherein the cellulose ether has at least one substituent selected from the group consisting of methyl, ethyl, propyl, hydroxymethyl, hydroxyethyl, and hydroxypropyl groups.

3. The method of claim 1, wherein the cellulose ether is at least one selected from the group consisting of methylcellulose, hydroxypropyl methylcellulose, and hydroxyethyl methylcellulose.

4. The method of claim 1, wherein a material for cross-linking the cellulose ether is at least one selected from the group consisting of glyoxal and glutaraldehyde.

5. The method of claim 4, wherein the material for cross-linking the cellulose ether is used at a content of 0.5 to 2.5% by weight, based on the total weight of the cellulose ether.

6. The method of claim 1, wherein the acetylated cellulose ether has a degree of substitution with alkyl groups (DS) of 1 to 2, a degree of substitution with hydroxyalkyl groups (MS) of 0 to 1, and a degree of substitution with acetyl groups (DS) of 1 to 2.

7. An acetylated cellulose ether prepared as defined in any one of claims 1 to 6, which is cross-linked with a material for cross-linking the cellulose ether selected from the group consisting of glyoxal and glutaraldehyde, and in which hydrogen atoms in hydroxyl groups included in a monomer of the cross-linked cellulose ether are substituted with acetyl groups.

## Patentansprüche

1. Verfahren zum Herstellen eines acetylierten Celluloseethers, der verbesserte Antifouling-Eigenschaften aufweist, umfassend die folgenden Schritte.
Vernetzen eines Celluloseethers; und
Acetylieren des vernetzten Celluloseethers.

2. Verfahren nach Anspruch 1, wobei der Celluloseether mindestens einen Substituenten aufweist, der aus der Gruppe ausgewählt ist, bestehend aus Methyl-, Ethyl-, Propyl-, Hydroxymethyl-, Hydroxyethyl- und Hydroxypropy-Igruppen.

3. Verfahren nach Anspruch 1, wobei der Celluloseether mindestens einer ist, der aus der Gruppe ausgewählt ist, bestehend aus Methylcellulose, Hydroxypropylmethylcellulose und Hydroxyethylmethylcellulose.

4. Verfahren nach Anspruch 1, wobei ein Material zur Vernetzung des Celluloseethers mindestens eines ist, das aus der Gruppe ausgewählt ist, bestehend aus Glyoxal und Glutaraldehyd.

5. Verfahren nach Anspruch 4, wobei das Material zur Vernetzung des Celluloseethers bei einem Gehalt von 0,5 bis 2,5 Gew.-%, bezogen auf das Gesamtgewicht des Celluloseethers, verwendet wird.

6. Verfahren nach Anspruch 1, wobei der acetylierte Celluloseether einen Substitutionsgrad mit Alkylgruppen (DS) von 1 bis 2, einen Substitutionsgrad mit Hydroxyalkylgruppen (MS) von 0 bis 1 und einen Substitutionsgrad mit Acetylgruppen (DS) von 1 bis 2 aufweist.

7. Acetylierter Celluloseether, hergestellt nach einem der Ansprüche 1 bis 6, der mit einem Material zur Vernetzung des Celluloseethers vernetzt ist, das aus der Gruppe ausgewählt ist, bestehend aus Glyoxal und Glutaraldehyd, und in dem Wasserstoffatome in Hydroxylgruppen, die in einem Monomer des vernetzten Celluloseethers umfasst sind, durch Acetylgruppen substituiert sind.

## Revendications

1. Procédé de préparation d'un éther de cellulose acétylé ayant des propriétés anti-colmatage améliorées, comprenant les étapes de :
réticulation d'un éther de cellulose ; et
acétylation de l'éther de cellulose réticulé.

2. Procédé selon la revendication 1, dans lequel l'éther de cellulose comporte au moins un substituant choisi dans le groupe constitué des groupes méthyle, éthyle, propyle, hydroxyméthyle, hydroxyéthyle et hydroxypropyle.

3. Procédé selon la revendication 1, dans lequel l'éther de cellulose est au moins l'un choisi dans le groupe constitué de la méthylcellulose, de l'hydroxypropyl méthylcellulose et de l'hydroxyéthyl méthylcellulose.

4. Procédé selon la revendication 1, dans lequel un matériau pour la réticulation de l'éther de cellulose est au moins l'un choisi dans le groupe constitué du glyoxal et du glutaraldéhyde.

5. Procédé selon la revendication 4, dans lequel le matériau pour la réticulation de l'éther de cellulose est utilisé en une teneur de 0,5 à 2,5 % en poids, sur la base du poids total de l'éther de cellulose.

6. Procédé selon la revendication 1, dans lequel l'éther de cellulose acétylé a un degré de substitution par des groupes alkyles (DS) de 1 à 2, un degré de substitution par des groupes hydroxyalkyles (MS) de 0 à 1, et un degré de substitution par des groupes acétyles (DS) de 1 à 2.

7. Éther de cellulose acétylé préparé selon l'une quelconque des revendications 1 à 6, qui est réticulé avec un matériau pour la réticulation de l'éther de cellulose choisi dans le groupe constitué du glyoxal et du glutaraldéhyde, et dans lequel les atomes d'hydrogène dans les groupes hydroxyles inclus dans un monomère de l'éther de cellulose réticulé sont substitués par des groupes acétyles.
